# EUROPEAN PATENT APPLICATION

(11) **EP 4 502 031 A1**
(43) Date of publication of application: **05.02.2025**
(21) Application number: 23188668.0
(22) Date of filing: 31.07.2023
(51) Int. Cl.: C08J 11/04

(54) **METHODS OF RECYCLING POLYCARBONATES**

(71) Applicant: Trinseo Europe GmbH, 8810 Horgen (CH)
(72) Inventor: Balan, Abidin, 4814VL Breda (NL); Mertens, Chiel, 9000 Gent (BE); Lakeman, Pascal, 4836AZ Breda (NL); Veraart, Rudi, 4527GJ Aardenburg (NL)
(74) Representative: Tostmann, Holger Carl

(57) **Abstract**

The disclosure provides a method that includes contacting a waste feedstock housed in a perforated container and one or more polycarbonate solvents that dissolve one or more waste polycarbonates in the waste feedstock to form a recovery solution. The method includes contacting the recovery solution and one or more functional compounds including a chain extender to form one or more adjusted polycarbonates from the one or more waste polycarbonates in the recovery solution. The method includes separating the one or more adjusted polycarbonates and the recovery solution.

## Description

### FIELD

Disclosed are methods of recycling polycarbonates from waste feedstocks and repairing the polycarbonates such that the repaired polycarbonates have sufficient quality useable in certain applications.

### BACKGROUND

Polycarbonate and copolymers containing carbonate units are utilized in a variety of molded structures. Polycarbonates and copolymers containing carbonate units form molded structures that are rigid. The molded structures may be used for a variety of uses, including cases for electronics, automobile parts, medical devices, home appliances, loud-speakers, home furnishings and the like. After extend use, these products are disposed of due to being damaged or replaced by newer products. In some instances, the polycarbonate used with these products has degraded such that it is no longer re-useable in new products with the same quality as virgin polycarbonate.

Accordingly, what is needed are techniques to recover waste polycarbonate in a state that it is useable in new products and with a similar quality as virgin polycarbonate.

### SUMMARY

The disclosure provides a method that includes contacting a waste feedstock housed in a perforated container and one or more polycarbonate solvents that dissolve one or more waste polycarbonates in the waste feedstock to form a recovery solution. The method includes contacting the recovery solution and one or more functional compounds including a chain extender to form one or more adjusted polycarbonates from the one or more waste polycarbonates in the recovery solution. The method includes separating the one or more adjusted polycarbonates and the recovery solution. The methods disclosed herein provide techniques of separating waste polycarbonate from other waste components such that functional compounds can be introduced to reduce free hydroxyl and/or carboxyl groups without significant side reactions and without negatively impacting the qualities or structure of the waste polycarbonate.

The one or more adjusted polycarbonates may have a number and/or weight average molecular weight that is larger than a number and/or weight average molecular weight of the one or more waste polycarbonates. The method may further include separating the waste feedstock and the recovery solution before contacting the recovery solution and the one or more functional compounds. The method may further include agitating the waste feedstock and/or the one or more polycarbonate solvents to disperse the one or more waste polycarbonates in the recovery solution. The agitating step may include cavitating, stirring, boiling, shaking, spinning, sonication, vibration, or any combination thereof. The method may further include applying ultrasonic waves to the waste feedstock and/or the one or more polycarbonate solvents to form cavitation bubbles so that the one or more waste polycarbonates are dispersed throughout the recovery solution. The method may further include applying heat to the waste feedstock and/or the one or more polycarbonate solvents to dissolve the one or more waste polycarbonates in the recovery solution. The step of heating may be applied to a temperature of about a boiling temperature of the one or more polycarbonate solvents or less. The heating may be applied to a temperature of about 25 °C to about 150 °C. The waste feedstock may be contained within a perforated container that is movable into and out of the recovery solution and/or the one or more polycarbonate solvents. The perforated container may include a filter layer that is permeable and is physically separate from the perforated structure. The step of contacting the one or more polycarbonate solvents and the waste feedstock may be performed in a sealed housing that is configured to apply heating and/or cooling to the one or more polycarbonate solvents and/or recovery solution. The method may further include applying heating or cooling to the sealed housing to condense the one or more polycarbonate solvents that are in a gaseous phase into the recovery solution.

The method may further include after removing the waste feedstock from the one of more polycarbonate solvents, separating the recovery solution and one or more non-polycarbonate compounds that are present in the recovery solution in a solid or liquid form. The method may further include before contacting the waste feedstock and the one or more polycarbonate solvents, pretreating the waste feedstock to remove one or more non-polycarbonate compounds. The one or more non-polycarbonate compounds may include polystyrene, styrene acrylonitrile, acrylonitrile butadiene, styrene, high impact polystyrene, polymethylmethacrylate, or any combination blends or copolymers thereof. The step of pretreating may include structurally altering the waste feedstock to increase the dissolvable surface area of the waste feedstock to reduce the time to dissolve the one or more waste polycarbonates in the one or more polycarbonate solvents. The step of separating the one or more adjusted polycarbonates and the recovery solution may include devolatilizing the recovery solution to remove the one or more polycarbonate solvents and to yield the adjusted polycarbonates in a solid form. After the contacting the waste feedstock and the one or more polycarbonate compounds, the recovery solution may include the one or more waste polycarbonates in a concentration of about 5 weight percent to about 30 weight percent by the total weight of the recovery solution. The one or more adjusted polycarbonates may have a weight average molecular weight of between about 10 kg/mol to about 100 kg/mol. The one or more adjusted polycarbonates may have a number average molecular weight of between 3 kg/mol to about 50 kg/mol. The one or more functional compounds may be added in an amount sufficient to chain terminate, branch, and/or chain extend the one or more waste polycarbonates to form the one or more adjusted polycarbonates having a desirable weight and/or number average molecular weight. The one or more functional compounds may be added to the recovery solution in an amount sufficient to increase the number and/or weight average molecular weight by about 5 percent or more of the one or more recycled polycarbonates. The one or more functional compounds may further include one or more of one or more chain terminators, one or more branching agents, or a combination thereof.

The method disclosed herein may use agitation and separation techniques to mix the solvent around waste feedstocks and to reduce the time utilized for dissolving the waste polycarbonate into the polycarbonate solvent. The methods disclosed herein provide techniques of separating waste polycarbonate from other waste components such that functional compounds can be introduced to reduce free hydroxyl and/or carboxyl groups without significant side reactions and without negatively impacting the qualities or structure of the waste polycarbonate. The methods disclosed herein provide techniques to separates polycarbonate from other waste products and to repair the polycarbonate and adjust molecular weight such that the adjusted polycarbonate has a number and/or weight average molecular weight that is greater than the number and/or weight average molecular weight of the waste polycarbonate and is similar to the number and/or weight average molecular weight of virgin polycarbonate. By utilizing techniques to separate polycarbonate and other polymers from waste feedstocks, other valuable metals and minerals can be separated from the waste feedstock and recycled into other applications. By using perforated containers and/or associated filters; waste polycarbonate cane be collected from waste feedstocks with minimal or no solid precipitates entering the recovery solution.

### BRIEF DESCRIPTION OF THE DRAWINGS

FIG. 1 illustrates a process to separate waste polycarbonate from a waste feedstock and to form adjusted polycarbonate.
FIG. 2 illustrates a process to separate one or more other components from a waste feedstock before the waste polycarbonate is separated from the waste feedstock in FIG. 1.

### DETAILED DESCRIPTION

While the disclosure has been described in connection with certain embodiments, it is to be understood that the disclosure is not to be limited to the disclosed embodiments and is intended to cover various modifications and equivalent arrangements included within the scope of the appended claims, which scope is to be accorded the broadest interpretation to encompass all such modifications and equivalent structures as is permitted under the law.

The present disclosure includes contacting a waste feedstock and one or more polycarbonate solvents configured to dissolve waste polycarbonate to form a recovery solution. Before adjusting the waste polycarbonate chains, one or more filters and/or perforated containers may be used to prevent and/or mitigate solids from entering the recovery solution and undesirably interacting with the waste polycarbonates and/or functional compounds. The recovery solution is then contacted with one or more functional compounds to adjust the molecular weight of the waste polycarbonate that was dissolved into the recovery solution to form adjusted polycarbonate. The one or more functional compounds may be used to bind with free hydroxyl and/or carboxyl groups and to chain extend and/or branch polycarbonate chains. The one or more carboxyl and/or hydroxyl groups in the recovery solution or waste feedstock may be included as a portion of the waste polycarbonate, one or more impurities, or any other compound that may negatively impact formation of the adjusted polycarbonate, or any combination thereof. Finally, the adjusted polycarbonate is separated from the recovery solution and is ready for downstream applications and/or is mixable with other non-polycarbonate compounds so that the adjusted polycarbonate has similar efficacy as virgin polycarbonate compositions. In each of the steps of the disclosed method, the steps may separately or in combination be performed as a batch, semi-batch, or continuous operation.

In the present disclosure, the term repaired refers to adjusting the molecular weight of the waste polycarbonate to an adjusted polycarbonate with a different molecular weight or with a reduced number of phenolic end groups. A recovery solution includes at least polycarbonate solvent and at least one polycarbonate compound. Waste polycarbonate refers to polycarbonate located in waste feedstocks. Adjusted polycarbonate refers to polycarbonate recovered from waste feedstocks and contacted with one or more functional groups as described herein. Virgin polycarbonate refers to polycarbonate made by one or more techniques that react one or more diols and carbonic acids to form polycarbonate.

Waste feedstocks include at least some waste polycarbonate. Waste feedstocks include waste polycarbonate and at least one other waste non-polycarbonate compound, such as a metal compound. Waste feedstocks contain from about 10 weight percent to less than 100 weight percent waste polycarbonate. Non-polycarbonate compounds include one or more of metals, non-polycarbonate polymers, battery electrolytes, small organic compounds, oligomeric compounds, or any combination thereof. Non-polycarbonate compounds may include one or more compounds commonly mixed or blended with polycarbonate, including non-polycarbonate containing polymer, (such as styrenics, polystyrene, styrene acrylonitrile, acrylonitrile butadiene, butadiene elastomers, high impact polystyrene, polymethylmethacrylate), flame retardants, UV stabilizers, fillers, antioxidants, other additives, other polymers, or any other non-polycarbonate compound. Examples of waste feedstocks may include any non-polycarbonate material in any waste containing polycarbonates, such as cases for electronics, plastic waste, toys, packages, conveyors, trays, automobile parts, medical devices, home appliances, loud-speakers, home furnishings, any other electronic device including non-polycarbonate polymers, metals, printed circuit boards, batteries, magnets, or any combination thereof. A portion of the non-polycarbonate compounds in the waste feedstock may be removed through one or more pretreatment steps before contacting the waste feedstock and a polycarbonate solvent so some of the non-polycarbonate compounds are not undesirably dissolved in the polycarbonate solvent.

One or more as used herein means that at least one, or more than one, of the recited components may be used as disclosed. Hydrocarbyl as used herein refers to a group containing one or more carbon atom backbones and hydrogen atoms, which may optionally contain one or more heteroatoms. Where the hydrocarbyl group contains heteroatoms, the heteroatoms may form one or more functional groups well known to one skilled in the art. Hydrocarbyl groups may contain cycloaliphatic, aliphatic, aromatic or any combination of such segments. The aliphatic segments can be straight or branched. The aliphatic and cycloaliphatic segments may include one or more double and/or triple bonds. Included hydrocarbyl groups are alkyl, alkenyl, alkynyl, aryl, cycloalkyl, cycloalkenyl, alkaryl and aralkyl groups. Cycloaliphatic groups may contain both cyclic portions and noncyclic portions. Hydrocarbylene means a hydrocarbyl group or any of the described subsets having more than one valence, such as alkylene, alkenylene, alkynylene, arylene, cycloalkylene, cycloalkenylene, alkarylene and aralkylene. Valence as used herein means a covalent bond between a hydrocarbyl or hydrocarbylene group and another group such as a carbonyl, oxygen, nitrogen or sulfur containing group or atom, or the referenced base compound. As used herein percent by weight or parts by weight refer to, or are based on, the weight of the compositions unless otherwise specified. Tg is the temperature or temperature range at which a polymeric material shows an abrupt change in its physical properties, including, for example, mechanical strength. Tg can be determined by differential scanning calorimetry (DSC). Post-industrial as used herein refers to a source of a material that originates during the manufacture of a good or product. Post-consumer as used herein refers to a source of material that originates after the end consumer has used the material in a consumer good or product.

Polycarbonate as used herein means a polymer containing carbonate units. Such polymers may be homopolymers consisting essentially of carbonate monomer units or copolymers containing one or more other monomer units (co-monomer units) and carbonate units. Such copolymers may be block copolymers containing two or more blocks of different monomer units or may be random copolymers with the different monomer units randomly located along the polymer backbone. The other monomer units may comprise any monomer units that do not negatively impact the inherent properties of polycarbonates, for instance heat resistance, impact resistance, moldability, flexural modulus, bending strength, haze and transparency, where required for the intended use. Among exemplary comonomer units are ester units, polysiloxane units, and the like. The amount of carbonate monomer units in copolycarbonates is selected such that the resulting polymer retains the desirable properties of polycarbonates, as disclosed herein. The copolycarbonates may contain greater than 50 mole percent carbonate monomer units, about 75 mole percent or greater carbonate monomer units, about 80 mole percent or greater carbonate monomer units or about 85 mole percent or greater carbonate monomer units. The copolycarbonates may contain about 99 mole percent or less carbonate monomer units, about 97 mole percent or less carbonate monomer units or about 95 mole percent or less carbonate monomer units. The copoly-carbonates may contain about 1 mole percent or greater co-monomer monomer units, about 3 mole percent or greater co-monomer monomer units or about 5 mole percent or greater co-monomer monomer units. The copolycarbonates may contain less than 50 mole percent co-monomer monomer units, about 25 mole percent or less co-monomer monomer units, about 20 mole percent or less co-monomer monomer units or about 15 mole percent or less co-monomer monomer units. The polycarbonate units may contain aromatic units in the backbone of the polymer.

The production of polycarbonates is affected, for example, by the reaction of diphenols with carbonic acid halides, preferably phosgene, and/or with aromatic dicarboxylic acid dihalides, preferably benzenedicarboxylic acid dihalides, by the phase boundary method, optionally with the use of chain terminators, e.g., monophenols, and optionally with the use of trifunctional branching agents or branching agents with a functionality higher than three, for example triphenols or tetraphenols. Diphenols useful to produce the aromatic polycarbonates and/or aromatic polyester carbonates may correspond to formula I 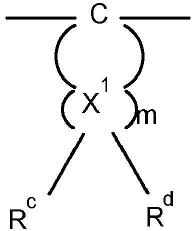 wherein A denotes a single bond, a C ₁₋₅ alkylene, a C ₂₋₅ alkylidene, a C ₅₋₆ cycloalkylidene, -O-, -SO-, -CO-, -S-, -SO₂-, or a C ₆₋₁₂ arylene, on to which other aromatic rings, which optionally contain hetero atoms, can be condensed, or a radical of formula II or III: 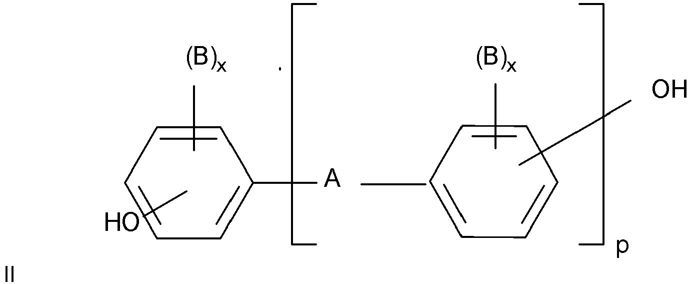 or 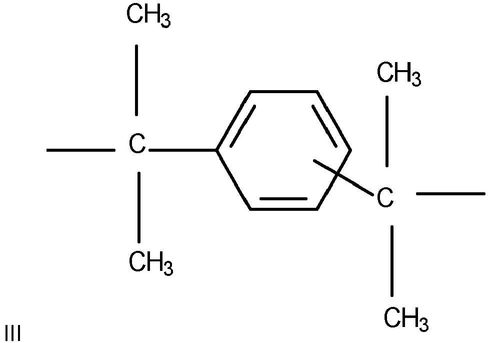
wherein B in each case is independently hydrogen, a C ₁₋₁₂ alkyl, preferably methyl, or a halogen, preferably chlorine and/or bromine;
x in each case is mutually independently 0, 1, or 2;
p is 0 or 1;
R^{c} and R^{d} are mutually independent of each other and are individually selectable for each X¹ and are hydrogen or a C ₁₋₆ alkyl, preferably hydrogen, methyl or ethyl;
X¹ denotes carbon; and
m denotes an integer from 4 to 7, preferably 4 or 5, with the proviso that R^{c} and R^{d} simultaneously denote an alkyl on at least one X¹ atom.

Exemplary diphenols are hydroquinone, resorcinol, dihydroxybiphenyls, bis (hydroxyphenyl)-C ₁₋₅ alkanes, bis(hydroxyphenyl)-C ₅₋₆ cycloalkanes, bis(hydroxyl-phenyl) ethers, bis(hydroxyphenyl)sulfoxides, bis(hydroxyphenyl)ketones, bis(hydroxyl-phenyl) sulfones and 4,4"-bis(hydroxyphenyl)diisopropylbenzenes, as well as derivatives thereof which have brominated and/or chlorinated nuclei. Diphenols which are particularly preferred are 4,4'-dihydroxybiphenyl, bisphenol A, 2,4-bis(4-hydroxyphenyl)-2-methyl-butane, 1,1-bis (4-hydroxyphenyl)-cyclohexane, 1,1-bis(4-hydroxyphenyl)-3,3,5-trimethyl-cyclohexane, 4,4-dihydroxydiphenyl sulfide and 4,4-dihydroxydiphenyl sulfone, as well as di- and tetra-brominated or chlorinated derivatives thereof, such as 2,2-bis(3-chloro-4-hydroxy-phenyl)propane, 2,2-bis-(3,5-dichloro-4-hydroxyphenyl)propane or 2,2-bis(3,5-dibromo-4-hydroxyphenyl)propane. 2, 2-bis-(4-hydroxyphenyl) propane (bisphenol A) is particularly preferred. The diphenols can be used individually or as arbitrary mixtures. The diphenols are known in the literature or can be obtained by methods known in the literature. Apart from bisphenol A homopolycarbonates, exemplary polycarbonates include copolycarbonates of bisphenol A with up to 15 mole percent, with respect to the molar sums of the diphenols, of other diphenols which are disclosed, such as 2,2-bis(3,5-dibromo-4-hydroxyphenyl)-propane.

To cap, branch, or chain extend the polycarbonates used in the present disclosure, one or more functional groups are used. Functional groups may include one or more chain extenders, chain terminators, branching agents, or a combination of both. Functional groups may be added to the recovery solution one at one time, individually over one or more periods of time, or in series to branch and/or chain extend and subsequently chain terminate and achieve desirable molecular weights and associated properties. The one or more functional compounds may be added to the recovery solution in an amount sufficient to reduce the amount of hydroxyl groups to the desired level, chain extend and/or branch the polycarbonates. The one or more functional compounds may be added to the recovery solution in an amount of about 0.01 weight percent or more, 0.1 weight percent or more, or about 0.5 weight percent or more, based on the total weight of the waste polycarbonate in the recovery solution. The one or more functional compounds may be added to the recovery solution in an amount of about 10 weight percent or less, 5 weight percent or less, or about 1 weight percent or less, based on the total weight of the waste polycarbonate in the recovery solution.

The chain terminator may be configured to react with at least one free hydroxyl and/or carboxyl group of one or more waste and/or adjusted polycarbonates to chain terminate, non-polycarbonate compounds to remove free hydroxyl and/or carboxyl groups, or both. The chain terminators described herein may be configured to bind with one or more hydroxyl or carboxyl groups in the recovery solution so that the free hydroxyl and/or carboxyl groups do not cleave one or more polycarbonate polymers. The chain terminators may include one or more groups that are reactable with the one or more hydroxyl or carboxyl groups in a condensation reaction. The chain terminators may be used to chain terminate the one or more waste and/or adjusted polycarbonates. The chain terminators may be used to bind with one or more non-polycarbonate compounds so that free hydroxyl and/or carboxyl groups are removed from the recovery solution and/or to prevent the polycarbonate chains from being cleaved by undesired interactions by the hydroxyl and/or carboxyl groups. The chain terminator may be any compound that reacts with the hydroxyl and or carboxyl groups which do not negatively impact the usefulness of the resulting polycarbonates. Exemplary chain terminators may include one or more isocyanates, amines, esters, epoxides, anhydrides, carboxylic acids, or any combination thereof.

Chain terminators may include one or more phenolic compounds. Phenolic compounds may include phenol, p-chlorophenol, p-tert-butylphenol, 4-(1,3-dimethyl-butyl)-phenol and 2,4,6-tribromophenol; long chain alkyl phenols, such as monoalkylphenols or dialkylphenols which contain a total of 8 to 20 carbon atoms in their alkyl substituents, exemplary are 3,5-di-tert-butyl-phenol, p-iso-octylphenol, p-tert-octylphenol, p-dodecylphenol, 2-(3,5-dimethylheptyl)-phenol and 4-(3,5-dimethylheptyl)-phenol.

Branching agents used in this disclosure may be any compound capable of separately reacting with three or more carboxyl and/or hydroxyl groups on the same or separate polycarbonate compounds. The branching agents may have a functionality of three or more, four or more, five or more, or six or more. The functionality is a measure of the ability to bind with individual hydroxyl and/or carboxyl groups. The branching agents may react with three or more, four or more, five or more, or a plurality of hydroxyl and/or carboxyl groups. The polycarbonates can be branched, for example by the incorporation of about 0.05 to about 2.0 mole percent, with respect to the sum of the branching agents used, of trifunctional compounds or of compounds with a functionality higher than three, for example those which contain three or more phenolic groups. Branched polycarbonates useful for the compositions disclosed can be prepared by known techniques, for example several methods are disclosed in USP 3,028,365; 4,529,791; and 4,677,162; which are hereby incorporated by reference in their entirety. Exemplary branching agents include tri- or multi-functional carboxylic acid chlorides, such as trimesic acid trichloride, cyanuric acid trichloride, 3,3'-,4,4'-benzophenone tetracarboxylic acid tetra chloride, 1,4,5,8-naphthalene-tetracarboxylic acid tetrachloride or pyromellitic acid tetra chloride, in amounts of about 0.01 to about 1.0 mole percent (with respect to the dicarboxylic acid dichlorides used) or tri- or multi-functional phenols such as phloroglucinol, 4,6-dimethyl-2,4,6-tris(4-hydroxyphenyl)-2-heptene, 4,4-dimethyl-2,4,6-tris (4-hydroxy phenyl) heptane, 1,3,5-tris(4-hydroxyphenyl)-benzene, 1,1,1-tris(4-hydroxy phenyl)ethane, tris(4-hydroxyphenyl)-phenyl-methane, 2,2-bis[4,4-bis(4-hydroxyphenyl) cyclohexyl]propane, 2,4-bis[1-(4-hydroxyphenyl)-1-methyl-ethyl]phenol, tetrakis(4-hydroxy phenyl)-methane, 2,6-bis(2-hydroxy-5-methyl-benzyl)-4-methyl-phenol, 2-(4-hydroxyphenyl) -2-(2,4-dihydroxyphenyl)propane, or tetrakis(4-[1-(4-hydroxyphenyl)-1-methylethyl]-phen-oxy)-methane in amounts of about 0.01 to about 1.0 mole percent with respect to the diphenols used. Phenolic branching agents can be placed in the reaction vessel with the diphenols. Acid chloride branching agents can be introduced together with the acid chlorides.

The chain extenders may include any compound having sufficient functional groups to bind two separate polycarbonate chains together. The chain extenders may be configured to react with two separate carboxyl and/or hydroxyl groups so that polycarbonate is chain extend or to remove free carboxyl and/or hydroxyl groups in the recovery solution. The chain extenders may comprise at least two functional groups sufficient to separately react with two different polycarbonate chains and/or free hydroxyl and/or carboxyl groups. The chain extenders may be used to bind with one or more non-polycarbonate compounds so that free hydroxyl and/or carboxyl groups are removed from the recovery solution and/or to prevent the polycarbonate chains from being cleaved by undesired interactions by the hydroxyl and/or carboxyl groups. A combination of chain extenders may be used to bind polycarbonates having different end groups. Examples of chain extenders may include two or more functions groups including isocyanates, amines, esters, epoxides, anhydrides, carboxylic acids, or any combination thereof.

The polycarbonate solvent functions to dissolve solid polycarbonate from a waste feedstock. The polycarbonate solvent may dissolve one or more waste polycarbonates from the waste feedstock without dissolving one or more other non-polycarbonate polymers and other materials that negatively impact the use of the recovered polycarbonates present in the waste stream. Polycarbonate solvents may have a boiling point sufficient to be heated to a temperature that will not break the chains of the polycarbonate. The polycarbonate solvent may have a boiling point of about 25 °C or more, 40 about °C or more, or about 60 °C or more. The polycarbonate solvent may have a boiling point of about 160 °C or less, about 120 °C or less, or about 80 °C or less. The polycarbonate solvent may be any solvent that preferentially dissolves polycarbonates with respect to other polymers and materials present in the waste stream that could negatively impact the use of the recovered polymers. The polycarbonate solvent may be a polar aprotic solvent. The polycarbonate solvent may comprise at least one halogen atom. The polycarbonate solvent may be free of one or more reactable protons. The polycarbonate solvent may be free of one or more carboxyl and/or hydroxyl groups. The polycarbonate solvent may not be capable of reacting with one or more carboxyl and/or hydroxyl groups. The polycarbonate solvent may be immiscible with a polar protic solvent, such as water, so that the polycarbonate solvent can be used in a devolatilization process to recover the polycarbonate solvent and, separately, the adjusted polycarbonate in a solid form. The polycarbonate solvent may comprise one or more of trichloromethane, dichloromethane, chlorobenzene, dichlorobenzene, or any combination thereof.

The pretreatment solvent may function to remove one or more non-polycarbonate compounds in the waste feedstock. The pretreatment solvent may be immiscible with the waste polycarbonate, the polycarbonate solvent, or both. The pretreatment solvent may be configured to capture one or more non-polycarbonate compounds that are polymers so that the polymers are not inadvertently dissolved in the polycarbonate solvent. In some examples, the pretreatment solvent may be utilized to dissolve one or more non-polycarbonate compounds that are recyclable or reusable independent of the waste polycarbonate. The pretreatment solvent may be separatable from the waste feedstock via a drying step. Pretreatment solvents may include a polar protic or aprotic solvent or a combination of both. Examples of the pretreatment solvent may include alcohols, ketones, aldehydes, acetonitrile, aliphatic hydrocarbons, benzene, toluene, ethylbenzene, water, chlorinated solvents, or any combination thereof.

The polycarbonate solvent and the waste feedstock may be contacted using any technique or a combination of techniques such that the polycarbonate solvent dissolves a portion of the waste polycarbonate or becomes saturated with waste polycarbonate in the recovery solution. The waste feedstock may be moved into contact with polycarbonate solvent that is located in an appropriate reservoir. In some examples, the polycarbonate solvent may be contacted with the waste feedstock by applying a gaseous or liquid fluid stream to a waste feedstock and allowing the polycarbonate solvent to collect in an appropriate reservoir as the recovery solution.

The polycarbonate solvent and the waste feedstock may be contacted in any housing sufficient to contain fluids (e.g., liquids and/or gases). The polycarbonate solvent and the waste feedstock may be contacted in a sealed housing that is configured to contain fluids and gases so that the waste feedstock may be mixed with fluids and gases to achieve desirable dissolution levels of waste feedstock. The waste feedstock may be moved into a sealed housing through an access point and moved into contact with polycarbonate solvent such that minimal or no polycarbonate solvent is lost through the access point as the waste feedstock is moved into and out of the sealed housing. In some examples, the sealed housing includes an airlock chamber that is configured to receive the waste feedstock a first access point, seal the first access point, and open a second access point to move the waste feedstock into contact with the polycarbonate solvent. Additional access points may be included to remove treated waste feedstock, waste polycarbonate, recovery solution, functional compounds, scavengers or absorption materials, and/or to add virgin or recycled polycarbonate solvent.

The polycarbonate solvent and the waste feedstock may be contacted in a housing that is configured to apply heating and cooling in a series of sections within the housing so that the housing can apply liquid and gaseous polycarbonate solvent in different locations. The housing may include bottom and middle sections that can each optionally be heated and a top section that is optionally cooled, where the waste feedstock may be moved into the housing at any section, and as heat is applied in the middle or bottom sections to volatilize polycarbonate solvent, the top section cools solvent so that the solvent does not escape through a top of the housing.

Before, during, or after contacting the polycarbonate solvent and the waste feedstock, heat and/or agitation may be applied to the waste feedstock, recovery solution, polycarbonate solvent, or combination thereof to improve dissolution time of the waste polycarbonate into the polycarbonate solvent. The heat and/or agitation may be applied in combination, separately, or in series to achieve desired concentration levels, saturation, and/or dissolution times of the waste polycarbonate in the polycarbonate solvent. The heat and/or agitation may separately or in combination provide techniques to control the physical state (e.g., gas, liquid, solid) of the polycarbonate solvent and/or waste polycarbonate.

The housing may be equipped with any instrument sufficient to apply heating and/or cooling to control the physical state of the polycarbonate solvent and improve dissolution of the waste polycarbonate in the polycarbonate solvent. Instruments that apply heating and/or cooling though any means sufficient to adjust the temperature of the polycarbonate solvent may be useable. The housing may be equipped with one or more, two or more, three or more, or a plurality of heating and/or cooling instruments to manipulate the temperatures of the polycarbonate solvent. The instruments for heating and cooling may be in the same section or may be positioned in separate locations and/or sections so that the state of the polycarbonate solvent is controlled and/or the polycarbonate solvent is prevented from escaping the housing. Agitation may be applied to polycarbonate solvent in a liquid state and separately in a gaseous state. Any type of agitation may be supplied which enhances the dissolution of polycarbonate into the polycarbonate solvent. In some examples, the housing may be equipped with multiple instruments configured to apply agitation in a single state. The housing may be equipped with a sonication device (i.e., for applying ultrasonic waves) and a stirring device so that two or more techniques can be used to improve agitation and, subsequently, dissolution of the waste polycarbonate into the polycarbonate solvent is improved. Examples of agitators may include sonicators, impellers, magnetic stirrers, vortexers, rockers, shakers, or any combination thereof.

The agitation may function to move dissolved waste polycarbonate molecules in a direction away from the waste feedstock so additional waste polycarbonate may be dissolved into the polycarbonate solvent and the entire recovery solution reaches a desired total concentration or saturation in less time. Agitation may be used on the polycarbonate solvent around the waste feedstock to mix the polycarbonate solvent and reduce localized saturation of the waste polycarbonate at a location directly adjacent to the waste feedstock. The agitation may be applied for any period of time or with any force sufficient to move waste polycarbonate molecules within the polycarbonate solvent and achieve desired concentration or saturation of the waste polycarbonate within the recovery solution.

The agitation may be applied at any location around the waste feedstock and/or within the polycarbonate solvent to achieve desired mixing and subsequent concentration levels and/or saturation. Agitation may be applied to the polycarbonate solvent in a liquid form at a reservoir such that waste polycarbonate solvents are dispersed throughout the entire recovery solution and localized saturation around the waste feedstock is avoided. Agitation and/or cooling may be applied to the polycarbonate solvent in a gaseous form around the waste feedstock such that polycarbonate solvent condenses on portions of the waste feedstock, collects into recovery solution that is liquid at a reservoir, and moves additional gaseous polycarbonate solvent into contact with the waste feedstock for condensation and collection.

Agitation of the waste feedstock and the polycarbonate solvent may be performed by any technique sufficient to move molecules in a solution and/or to mechanically increase surface area of a solid object. Agitation may be performed by applying a force to the waste feedstock or container holding the waste feedstock so that waste feedstock is shifted in a fashion to move dissolved molecules of the waste polycarbonate adjacent to the waste feedstock and reduce localized saturation of the waste polycarbonate in the polycarbonate solvent. Additionally, combinations of agitation may be used both to the polycarbonate solvent and the waste feedstock or container holding the waste feedstock such that waste polycarbonate molecules are moved in the polycarbonate solvent. The container holding the waste feedstock may be shook or rocked as ultrasonic waves are applied from an external sonication device, which provides for improved shifting of polycarbonate solvent around the waste feedstock. Examples of agitation may include cavitating, swirling, shaking, rocking, spinning, stirring, or any combination thereof.

The application of heat may function to raise the temperature of the polycarbonate solvent to the boiling point or below of the polycarbonate solvent so that the disclosed methods can achieve desired levels of concentration, saturation, and/or dissolution times of the waste polycarbonate in the polycarbonate solvent. The heat may be applied such that the polycarbonate solvent boils and a portion of the polycarbonate solvent transitions to a gaseous form. When the heat is applied to transition the polycarbonate solvent into a gaseous form, the vaporized polycarbonate solvent may be contained in a sealed housing or chamber above the recovery solution and/or waste feedstock as waste polycarbonate is dissolved into the polycarbonate solvent. The heat may be applied up to a boiling temperature of the polycarbonate solvent and without cleaving one or more polycarbonate chains. The heat may be applied to the polycarbonate solvent in a temperature of about 30 °C or more, about 40 °C or more, or about 50 °C or more. The heat may be applied to the polycarbonate solvent in a temperature of about 160 °C or less, about 120 °C or less, or about 80 °C or less.

After contacting the polycarbonate solvent and the waste feedstock to form the recovery solution, the waste feedstock may be removed from the recovery solution once a desirable concentration of waste polycarbonate is achieved in the recovery solution. The waste feedstock may be removed by any means sufficient to separate a solid from a liquid. The waste feedstock may be raised out of the liquid recovery solution by an appropriate container. In some examples, the waste feedstock may be raised out of the recovery solution, subsequently washed by a vapor phase polycarbonate solvent, and removed from the housing containing the recovery solution. The waste polycarbonate may have any desirable concentration in the polycarbonate solvent such that the waste polycarbonate can be repaired by one or more functional compounds in subsequent steps. The waste polycarbonate may have a concentration in the polycarbonate solvent that is equal to or less than a saturation level at or just below the boiling point of the polycarbonate solvent. The waste polycarbonate may have a concentration in the polycarbonate solvent of about 1 weight percent or more, about 5 weight percent or more or about 10 weight percent or more. The waste polycarbonate may have a concentration in the polycarbonate solvent of about 50 weight percent or less, about 30 weight percent or less, or about 20 weight percent or less.

The waste feedstock may be housed in any container sufficient to hold and move solid components into and out of a location of the polycarbonate solvent. The waste feedstock may be housed in a container with sufficient structural integrity to hold the solid components of the waste feedstock while within the polycarbonate solvent and/or during agitation. The container may be movable such that the waste feedstock may be moved into and out of a sealed housing as the waste polycarbonate is dissolved into the polycarbonate solvent in the steps described herein. The container may be configured to allow fluids to flow into and out of contact with the waste feedstock so that the waste polycarbonate can be dissolved into the polycarbonate solvent. The container may have permeability sufficient for fluids to move in and out of the container while solids are contained. In some examples, the container may have a perforated configuration with a plurality of perforations that are configured to allow fluids and solids to move in and out of the container, improve fluid flow, and/or exclude solids of a certain size from exiting the container. The plurality of perforations may have any width sufficient to exclude undesirably sized solids from exiting the container. Width is measured from the largest cross-section portion of the opening of the individual perforation. The plurality of perforations may have a width of about 0.01 microns or more, about 10 micron or more, or about 500 micron or more. The width may be about 20 cm or less, about 10 cm or less, or about 1 cm or less.

The container may separately include one or more permeable filters that are configured to contain solids and allow the waste polycarbonate to be contacted by and dissolved into the polycarbonate solvent so that the recovery solution is formed. The permeable filter may be used to remove the waste feedstock from the perforated container after all or a portion of the waste polycarbonate is dissolved in the polycarbonate solvent and a new permeable filter containing a different waste feedstock may be placed into the perforate container. The perforated container may include one or more, two or more, three or more, or a plurality of permeable filters. The permeable filter may be free of perforations. The permeable filter may have a size sufficient to cover all of the plurality of perforations on the perforated container. The permeable filter may have a pore size sufficient to exclude solids of a desirably small size. The permeable filter may have a pore size that is a width that is smaller than width of the perforations on the perforated container. The width of the pores may be a measurement of distance between the edges of the largest cross-sectional area on the pore. The pores may have a width of about 50 microns or more, to about 500 microns or more, to about 0.5 cm or more. The pores may have a width of about 5 cm or less, about 3 cm or less, or about 1 cm or less. The permeable filter may be made of any material sufficiently strong to contain the waste feedstock and exclude particles of a sufficient size from entering the recovery solution. The permeable filter may be contain one or more yarns or fibers. The fibers or yarns may be woven or layered to achieve desirable pore sizes. The fibers and/or yarns may be continuous or chopped to achieve desirable configurations of pores. The yarns and/or fibers may be composed of any material sufficiently strong to form pores and contain the waste feedstock. The yarns and/or fibers may be made of nylon, PTFE, PET, wool, glass, metal, or any combination thereof. The permeable filter may contain one or more other extruded polymers use with or without yarns or fibers to achieve pores of a desirable size.

The perforated container and the permeable filter may be layered in any configuration sufficient to contain the waste feedstock. The permeable filter may physically separate solid components of the waste feedstock from the perforated container so that the perforated container can structurally support the permeable filter. In other examples, the perforated structure may be in direct contact with the feedstock and the permeable filter may be positioned on an outside of the perforated container such that the perforated container holds the waste feedstock and partially excludes particles, while the permeable filter provides one or more secondary layers of filtration because of the use of smaller pore sizes in the permeable filter. Individually or in combination, the perforated container and/or the permeable filter may exclude any solid particle, such as metals, that is too large to pass through the perforations and/or pores so that the solid particles do not undesirable interact with the functional compounds and/or the waste and/or adjusted polycarbonate in the recovery solution. The perforated container and/or the permeable may exclude solid particles having a cross-sectional diameter of about 50 microns or more, to about 500 microns or more, to about 0.5 cm or more. The particles may have a cross-sectional diameter of about 5 cm or less, about 3 cm or less, or about 1 cm or less The perforated container may be equipped with or connected with any apparatus sufficient to agitate the perforated container within the polycarbonate solvent so the dissolution of waste polycarbonate into the polycarbonate solvent is improved. The housing may be configured to contact the polycarbonate solvent with a single or plurality of perforated containers at the same time.

The polycarbonate solvent and the waste feedstock may be contacted for any period of time sufficient to dissolve the waste polycarbonate from the waste feedstock to a target concentration of polycarbonate waste in the polycarbonate solvent. The amount of time sufficient to dissolve the waste polycarbonate into the polycarbonate solvent at a desired concentration or to saturation may be dependent on the agitation and/or temperatures applied to the waste feedstocks and/or polycarbonate solvent. The polycarbonate solvent and the waste feedstock may be contact for a period of 10 min or more, about 60 min or more, or about 90 min or more. The polycarbonate solvent and the waste feedstock may be contact for a period of 6h or less, about 4h or less, or about 3h or less. More than one batch of waste feedstock may be contacted with and removed from the polycarbonate solvent until a desired concentration of waste polycarbonate is achieved in the recovery solution.

Excess polycarbonate solvent and/or waste polycarbonate located on or in the waste feedstock when the waste feedstock is removed from the recovery solution may be removed through any technique sufficient to separate two components. The waste feedstock may be subjected to shaking, swirling, cavitation, rocking, washing, a combination thereof, or any other force or technique sufficient to dissolve waste polycarbonate or remove polycarbonate solvent such that polycarbonate solvent droplets separate or drip from the waste feedstock. The waste feedstock may be subjected to a vapor wash of the polycarbonate solvent that condenses on the waste feedstock and drips into an appropriate reservoir. The waste feedstock may be suspended in a cooled location where the polycarbonate solvent rises into in a vapor form such that the polycarbonate condenses on the waste feedstock, dissolves waste polycarbonate, drips into a reservoir, and collects as the recovery solution.

Before contacting the recovery solution and the one or more functional compounds, the recovery solution may be subjected to one or more separation steps. The recovery solution may be contacted with one or more absorption materials or scavengers that are configured to precipitate or make inert one or more non-polycarbonate compounds that were dissolved from the waste feedstock into the polycarbonate solvent. The recovery solution may be contacted with absorption materials such as one or more of activated carbon, clays, zeolites, polymeric absorbents, or any combination thereof to remove non-polycarbonate compounds found in the waste feedstocks. Scavengers may include any functional groups sufficient to bind with free hydroxyl, carboxyl, other non-polycarbonate compounds susceptible to cleaving polycarbonate chains, or a combination thereof so that undesirable interactions with the functional groups and/or waste polycarbonates are mitigated or avoided. Examples of scavenger compounds may include one or more of isocyanates, amines, esters, epoxides, anhydrides, carboxylic acids, or any combination thereof. After reacting with one or more non-polycarbonate compounds in the recovery solution, the scavengers and/or absorption compounds may be removed as liquids or solids as described herein.

If the non-polycarbonate compounds are not precipitated with the scavenger and/or absorption materials, the non-polycarbonate compounds may be removed by one or more separation techniques configured to remove liquids from liquids, such as though solvent extraction, distillation, or any combination thereof. Solids may be present in the recovery solution due the above precipitation by the scavenger and/or absorption materials or by moving through the plurality of perforations in the perforated container. The recovery solution may have any solid non-polycarbonate compounds removed from the recovery solution before addition of the functional compounds to avoid undesired side reactions. The solids may be removed by any known techniques sufficient to separate a solid from a liquid. The solids may be removed from the recovery solution through filtration, decantation, precipitation, sedimentation, evaporation, centrifugation, solvent extraction, reverse osmosis, or any combination thereof. The solids may be filtered by using a filter having pores that are a width that is smaller than a width of the plurality of perforations. Liquids may be removed by any separation technique described herein. Some non-polycarbonate compounds that do not interfere with the polycarbonate compounds or functional compounds may remain in the recovery solution until the polycarbonate solvent and adjusted polycarbonates are removed.

Once the waste polycarbonate or a portion thereof is dissolved into the polycarbonate solvent such that a recovery solution is formed, the recovery solution is contacted with one or more functional compounds to adjust the waste polycarbonate and form the adjusted polycarbonate. The one or more functional compounds may chain terminate, chain extend, or branch the waste polycarbonate such the adjusted polycarbonate has increased molecular weight and/or properties and reduced hydroxyl and/or carboxyl compounds present in the recovery solution. The one or more functional compounds may increase the number and/or weight average molecular weight of the waste polycarbonate. The weight and/or number average molecular weight may increase by a percentage relative to the number and/or weight average molecular weight of the waste polycarbonate before addition of the one or more functional compounds. The percentage increase may be about 5 percent or more, 20 percent or more, or about 40 percent or more. The percentage increase may be about 100 percent or less, about 75 percent or less, or about 50 percent or less. The adjusted polycarbonate may have a number and/or weight average molecular weight that is larger than a number and/or weight average molecular weight of the waste polycarbonate. The weight average molecular weight of the adjusted polycarbonate may be about 10 kg/mol or larger, about 30 kg/mol or larger, or about 50 kg/mol or larger relative to the waste polycarbonate. The weight average molecular weight of the adjusted polycarbonate may be about 70 kg/mol or larger, about 90 kg or larger, or about 100 kg/mol or larger relative to the waste polycarbonate. The number average molecular weight of the adjusted polycarbonate may be about 3 kg/mol or larger, about 10 kg/mol or larger, or about 20 kg/mol or larger relative to the waste polycarbonate. The number average molecular weight of the adjusted polycarbonate may be about 30 kg/mol or larger, about 40 kg/mol or larger, or about 50 kg/mol or larger relative to the waste polycarbonate. After adding the one or more functional groups to the recovery solution, the adjusted polycarbonate may have a melt flow rate sufficient to be used in downstream processes with similar quality as virgin polycarbonate. The melt flow rate may be similar or substantially the same as virgin polycarbonate. The melt flow rate of the adjusted polycarbonate may be greater or less than the melt flow rate of the waste polycarbonate due to having an adjusted molecular weight from addition of the one or more functional compounds. The melt flow rate of the adjusted polycarbonate may be about 1 g/10 min or more, about 5 g/10min or more, or about 20 g/10min or more. The melt flow rate of the adjusted polycarbonate may be about 80 g/10 min or less, about 60 g/10min or less, or about 40 g/10min or less.

After adding the functional groups to the recovery solution, the hydroxyl and/or carboxyl groups may be present in a sufficiently low amount to reduce or avoid chain cleavage in the polycarbonates. After adding the functional groups to the recovery solution, the functional compounds may react with hydroxyl and/or carboxyl groups such that the recovery solution is free or essentially free (e.g., 0.1, 0.01, or 0.01 weight percent or less present) of hydroxyl and/or carboxyl groups. The one or more functional compounds may reduce the amount of free hydroxyl and/or carboxyl groups by 50 mole percent or more, 70 mole percent or more or 90 mole percent or more. The one or more functional groups may reduce the amount of free hydroxyl and/or carboxyl groups by 95 mole percent or more 98 mole percent or more or 99 mole percent or more. The molar amount of hydroxyl and/or carboxyl groups present in the recovery solution may be reduced by the molar amount of functional groups contained in the one or more functional compounds and configured to react with hydroxyl and/or carboxyl groups.

The functional compounds and the recovery solution may be agitated and/or mixed to increase the rate of reaction and/or influence the molecular weight and/or properties of polycarbonates. The functional compounds and/or recovery solution may be agitated by any technique as described in relation to contacting the polycarbonate solvent and the waste feedstock. The functional compounds and/or recovery solution may be heated by any technique as described in relation to contacting the polycarbonate solvent and the waste feedstock. The functional compounds and/or recovery solution may be heated to any desired temperature without damaging and/or cleaving the adjusted polycarbonate.

The functional compounds and the recovery solution may be heated to any temperature sufficient to react the functional compounds and the waste polycarbonate and/or to react with free hydroxyl and/or carboxyl groups. The functional compounds and the recovery solution may be heated to any temperature sufficient to react the cause the one or more functional groups to chain terminate, chain extend, and/or branch the polycarbonate such that a desirable molecular weight is achieved. The functional compounds and the recovery solution may be heated to a temperature that is sufficiently low to avoid chain cleavage in the waste and/or adjusted polycarbonate. The functional compounds may be heated to a temperature of about 30 °C or more, about 50 °C or more, or about 70 °C or more. The functional compounds may be heated to a temperature of about 150 °C or less, about 120 °C, or about 100 °C. In some examples, no heat is applied and the reaction is conducted at ambient temperatures (i.e., about 25 °C).

After forming the adjusted polycarbonates, the recovery solution may be subjected to a step of recovering and/or separating the polycarbonate solvent and/or adjusted polycarbonates. The polycarbonate solvent and the adjusted polycarbonate may be removed in a simultaneous fashion or separately in series. The recovery solution may be subjected to a process step that separates the polycarbonate solvent and the adjusted polycarbonate at the same time so that the adjusted polycarbonate can be used in downstream processes and the polycarbonate solvent is reusable to recover additional waste polycarbonate through a recycle pathway. The recovery solution may be subjected to any techniques sufficient to separate two components in a liquid state. The recovery solution may be subjected to one or more of devolatilization, centrifugation, filtration, distillation, or any combination thereof to separate the adjusted polycarbonate and the polycarbonate solvent. Compounds that remain after removing the polycarbonate solvent and adjusted polycarbonate may be disposed of or subjected to further separation steps to recover desirable compounds and recycle them. A non-solvent may be contacted with the with recovery solution to precipitate the adjusted polycarbonate from the polycarbonate solvent in a form that is free or essentially free of impurities or that may be subjected to further separation techniques. Non-solvents may include one or more compounds that are immiscible with polycarbonate solvent, such as water, aliphatic hydrocarbons, alcohols, acetonitrile, acetone, or any combination thereof.

The recovered adjusted polycarbonate may be subjected to one or more further treatment steps to remove undesirable compounds. The adjusted polycarbonate may be subjected to one or more steps to remove volatile compounds, such as residual solvent or moisture. The adjusted polycarbonate may be subjected to one or more steps to remove additives that remain in the waste feedstock so that the user can control the amount and/or combination of additives in the final polycarbonate composition. the adjusted polycarbonate may be subjected to drying, absorption, filtration, scavenging, or any combination thereof.

In downstream process uses, the adjusted polycarbonate may be contacted with one or more compounds desirable to make a downstream product or composition. The adjusted polycarbonate may be mixed or blended with one or more other polymers or virgin polycarbonate to achieve desirable properties. Other polymers may include polystyrene, styrene acrylonitrile, acrylonitrile butadiene, styrene, high impact polystyrene, polymethylmethacrylate, polyolefins or any combination thereof. The adjusted polycarbonate may be mixed with one or more additives sufficient to achieve desirable properties. The additives may include one or more of fillers, flame retardants, pigments, UV stabilizers, antioxidants, mold release agents, dyes, or any combination thereof.

The polycarbonate solvent may be recycled into a new and untreated waste feedstock to recover additional waste polycarbonate, begin the process again, and avoid undesirable disposal or loss of the polycarbonate solvent. The polycarbonate solvent may be separated from the recovery solution and moved back into a reservoir or the waste feedstock through one or more recycle pathways that extend between chambers. Before being recycled back into contact with the waste feedstock, the polycarbonate solvent may be subjected to one or more separation steps to remove undesired impurities. The polycarbonate solvent may be subjected to drying, centrifugation, filtration, distillation, or any combination thereof.

Before contacting the waste feedstock and the one or more polycarbonate solvents, the waste feedstock may be subjected to one or more pretreatment steps to separate one or more non-polycarbonate compounds from the waste feedstock to recover desired compounds and/or to avoid undesirable reactions in the recovery feedstock. The waste feedstock may be subjected to any pretreatment step configured to remove one or more non-polycarbonate compounds or to prepare the waste feedstock for more efficient extraction of waste polycarbonate. The waste feedstock may be structurally altered to expose surface area of the components in the waste feedstock and/or prepare the waste feedstock for downstream processing steps, which may be conducted by shredding, grinding, pressing, dismantling, sorting, or any combination thereof. The waste feedstock may be treated to remove one or more non-polycarbonate compounds, such as inorganic compounds, non-polycarbonate polymers (e.g., polystyrene, styrene acrylonitrile resin, acrylonitrile butadiene styrene, high impact polystyrene, polymethylmethacrylate, other polymers commonly blended with polycarbonate, etc.), small organic molecules, or any combination thereof. The waste feedstock in the pretreatment step may be subjected to melting, magnetic field, density separation, freezing, agglomeration, washing, chemical removal of adhesives, selective dissolution of other polymers, drying, heating, cooling, or any combination thereof.

The above steps may be completed in the same chamber or in a series of chambers. Contacting the polycarbonate solvent and the waste feedstock may be conducted in a first chamber; contacting the recovery solution and one or more functional compounds may be conducted in a second chamber, and recovering and/or separating the polycarbonate solvent and adjusted polycarbonate may be conducted in a third chamber. Performing the above steps in a series of chambers may mitigate side reactions while functional compounds are added or to more closely control separation steps. All of the steps may be conducted in the same chamber in a one pot style that recovers, adjusts/repairs, and removes polycarbonates in one location. One or more pathways may separate the chambers and move the recovery solution, waste feedstock, polycarbonate solvent, adjusted polycarbonate, or a combination thereof from chamber to chamber as appropriate.

Between each of the above process steps, each of the chambers within the housing may connect through pathways that are configured to move compounds, such as the recovery solution, waste feedstock, adjusted polycarbonate, polycarbonate solvent, and/or pretreatment solvents, between chambers. The pathways may include any equipment sufficient to move the compounds and/or provide additional processing. The pathways may include equipment to separate one or more of the solid compounds from the recovery solution, such as filters. The housing may include any number of pathways between the chambers. The housing may include one or more, two or more, three or more, four or more, or a plurality of pathways between the chambers. Each of the pathways may be configured to simply move compounds between chambers, recycle polycarbonate solvents after processing polycarbonates, separate non-polycarbonate and polycarbonate compounds, remove separated non-polycarbonate compounds out of the housing, move waste feedstocks into and out of the housing, or any combination thereof. The pathways or chambers may be equipped with equipment configured to monitor the concentrations or properties of the compounds present in the pathways or chambers. The pathways and/or chambers may be equipped with concentration sensors, number and/or weight average molecular weight sensors, impurity sensors, phase sensors for detecting solids, gases, or liquids, humidity sensors, temperature sensors, or any combination thereof.

The disclosed compositions of adjusted polycarbonates may be used to prepare structures comprising or containing them utilizing any known processes, such as extrusion, molding, thermoforming, and the like. The disclosed compositions of adjusted polycarbonates may be molded using procedure known in the art. The polycarbonate compositions may be molded into useful shaped articles by a variety of means such as injection molding, overmolding, extrusion, rotational molding, blow molding and thermoforming to form various molded articles. Such articles may include thin-walled articles for consumer goods like cellphones, MP3 players, computers, laptops, cameras, video recorders, electronic tablets, hand receivers, kitchen appliances, electrical housings, etc., e.g. a smart meter housing, and the like; electrical connectors, and components of lighting fixtures, omaments, home appliances, roofs, greenhouses, sun rooms, swimming pool enclosures, Light Emitting Diodes (LEDs) and light panels, extruded film and sheet articles; electrical parts, such as relays; and telecommunications parts such as parts for base station terminals. The present disclosure further contemplates additional fabrication operations on said articles, such as, but not limited to, molding, in-mold decoration, baking in a paint oven, lamination, and/or thermoforming. The compositions disclosed are heated to temperatures at which the composition flows, which may be above the glass transition temperatures of the polycarbonates in the composition. Such temperatures may be greater than 155 °C, above 200 °C or greater, 250 °C or greater. Such temperatures may be 400 °C or less or 300 °C or less. The mold may be heated to facilitate processing such as to 60 °C or greater, 80 °C or greater or 100 °C or greater.

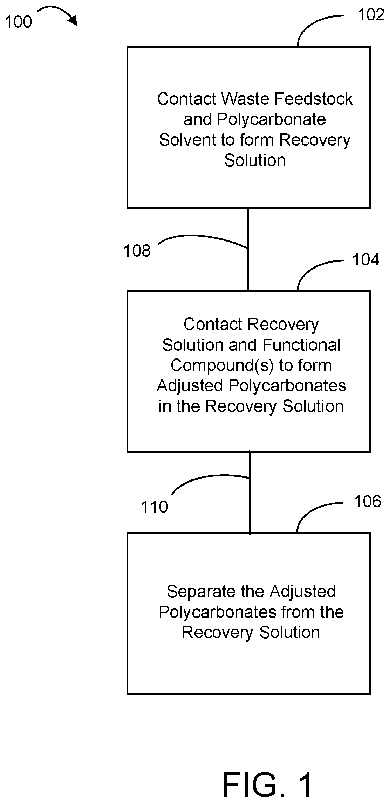

FIG. 1 illustrates a system 100 to separate waste polycarbonate from a waste feedstock and to form adjusted polycarbonate. The housing system 100 includes a recovery chamber 102, a repair chamber 104, and a separation chamber 106. Waste feedstock and polycarbonate solvent are contacted in the recovery chamber 102 so that the waste polycarbonate contained within the waste feedstock is dissolved into the polycarbonate solvent and forms a recovery solution. The recovery solution is then moved through a first pathway 108, which may optionally filter particulates, into the repair chamber 104. The recovery solution and one or more functional compounds are contacted in the repair chamber 104 to chain extend and/or terminate the waste polycarbonate and adjust the molecular weight so that an adjusted polycarbonate is formed with a number and/or weight average molecular weight that is higher than the waste polycarbonate. The recovery solution containing the adjusted polycarbonate is then moved from the repair chamber 104 through the second pathway 110, which may optionally filter undesirable compounds from the recovery solution, into the separation chamber 106. The adjusted polycarbonate is separated from the recovery solution in the separation chamber 106 so that the adjusted polycarbonate is useable in various applications and the polycarbonate solvent is recyclable, for example, through a recycle pathway back to the recovery chamber 102.

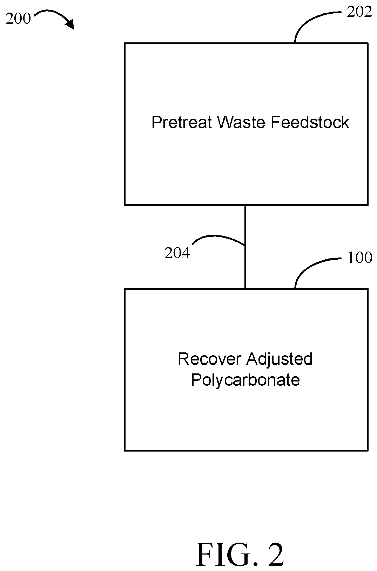

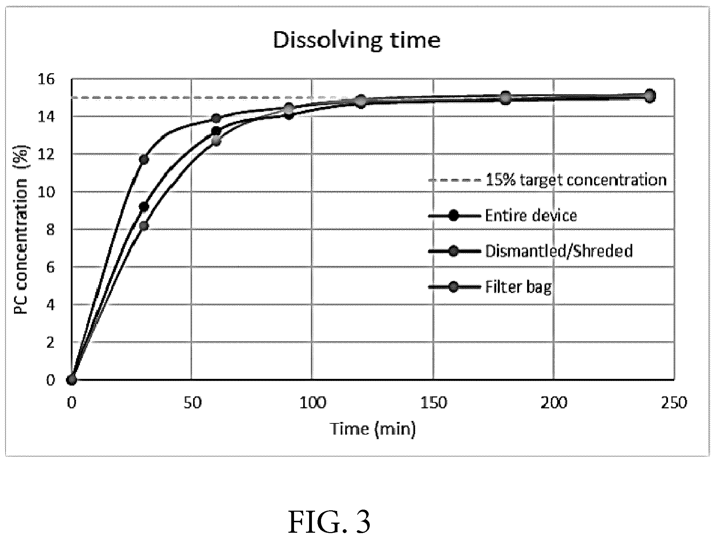

FIG. 2 illustrates another housing system 200 to separate one or more other components from a waste feedstock before the waste polycarbonate is separated from the waste feedstock in the housing system 100 of FIG. 1. The housing system 200 includes pretreatment chamber 202 connected with the housing system 100 of FIG. 1 through a pretreatment pathway 204. The pretreatment chamber 202 is configured to remove one or more non-polycarbonate compounds from the waste feedstock before contacting the waste feedstock and the polycarbonate solvent in the housing system 100 by applying pretreatment steps, such as heating and/or pretreatment solvents, or is configured to increase surface area of the waste feedstock by pretreatment steps so that the polycarbonate solvent more easily dissolves the waste polycarbonate, such as by mechanical or chemical disassembly of the waste feedstock.

### Embodiments

Embodiment 1. A method, comprising:
   a. contacting a waste feedstock housed in a perforated container and one or more polycarbonate solvents that are configured to dissolve one or more waste polycarbonates in the waste feedstock to form a recovery solution;
   b. contacting the recovery solution and one or more functional compounds comprising a chain extender to form one or more adjusted polycarbonates from the one or more waste polycarbonates in the recovery solution; and
   c. separating the one or more adjusted polycarbonates and the recovery solution.
Embodiment 2. The method of embodiment 1, wherein the one or more adjusted polycarbonates have a number and/or weight average molecular weight that is larger than a number and/or weight average molecular weight of the one or more waste polycarbonates.
Embodiment 3. The method of embodiments 1 or 2, wherein the one or more adjusted polycarbonates have an average molecular weight higher than the average molecular weight of the one or more waste polycarbonates.
Embodiment 4. The method of any one of the previous embodiments, further comprising: a. separating the waste feedstock and the recovery solution before contacting the recovery solution and the one or more functional compounds.
Embodiment 5. The method of any one of the previous embodiments, further comprising: Embodiment a. agitating the waste feedstock and/or the one or more polycarbonate solvents to disperse the one or more waste polycarbonates in the recovery solution.
Embodiment 6. The method of any one of the previous embodiments, wherein the step of agitating comprises cavitating, stirring, boiling, shaking, spinning, sonication, vibration, or any combination thereof.
Embodiment 7. The method of any one of the previous embodiments, further comprising: a. applying ultrasonic waves to the waste feedstock and/or the one or more polycarbonate solvents to form cavitation bubbles so that the one or more waste polycarbonates are dispersed in the recovery solution.
Embodiment 8. The method of any one of the previous embodiments, further comprising: a. applying heat to the waste feedstock and/or the one or more polycarbonate solvents to dissolve the one or more waste polycarbonates in the recovery solution.
Embodiment 9. The method of any one of the previous embodiments, wherein heating is applied to a temperature of about a boiling temperature of the one or more polycarbonate solvents or less.
Embodiment 10. The method of any one of the previous embodiments, wherein heating is applied to a temperature of about 25 °C to about 150 °C.
Embodiment 11. The method of any one of the previous embodiments, wherein the waste feedstock is contained within a perforated container that is movable into and out of the recovery solution and/or the one or more polycarbonate solvents.
Embodiment 12. The method of any one of the previous embodiments, wherein the perforated container comprises a filter layer that is permeable and is physically separate from the perforated structure.
Embodiment 13. The method of any one of the previous embodiments, wherein the step of contacting the one or more polycarbonate solvents and the waste feedstock is performed in a sealed housing so that the one or more polycarbonate solvents are contained within the sealed housing when in a gaseous form.
Embodiment 14. The method of any one of the previous embodiments, wherein the step of contacting the one or more polycarbonate solvents and the waste feedstock is performed in a sealed housing that is configured to apply heating and/or cooling to the one or more polycarbonate solvents and/or recovery solution.
Embodiment 15. The method of any one of the previous embodiments, wherein the waste feedstock is removable from the recovery solution within the sealed housing and removable from the sealed housing through one or more access points.
Embodiment 16. The method of any one of the previous embodiments, further comprising: a. applying heating or cooling to the sealed housing to condense the one or more polycarbonate solvents that are in a gaseous phase into the recovery solution.
Embodiment 17. The method of any one of the previous embodiments, further comprising: a. after removing the waste feedstock from the one of more polycarbonate solvents, separating the recovery solution and one or more non-polycarbonate compounds that are present in the recovery solution in a solid or liquid form.
Embodiment 18. The method of embodiment 17, wherein the step of separating the recovery solution and the one or more non-polycarbonate compounds comprises:
   a. Gravitational separating, centrifugal separating, decanting, disk stack centrifugating, membrane filtering, reverse osmosis, precipitating, solvent extracting, or any combination thereof.
Embodiment 19. The method of any one of the previous embodiments, further comprising:
   a. before contacting the waste feedstock and the one or more polycarbonate solvents, pretreating the waste feedstock to remove one or more non-polycarbonate compounds.
Embodiment 20. The method of any one of the preceding embodiments, wherein the step of pretreating comprises:
   a. contacting the waste feedstock and one or more pretreatment solvents to dissolve one or more non-polycarbonate compounds that are dissolvable in the one or more polycarbonate solvents.
Embodiment 21. The method of any one of the preceding embodiments, wherein the one or more polycarbonates are immiscible or have essentially no solubility with the one or more pretreatment solvents.
Embodiment 22. The method of any one of the preceding embodiments, wherein the one or more pretreatment solvents comprise one or more of alcohols, ketones, aldehydes, water, chlorinated solvents, or any combination thereof.
Embodiment 23. The method of any one of the preceding embodiments, wherein at least some of the one or more non-polycarbonate compounds are dissolvable in the polycarbonate solvent.
Embodiment 24. The method of any one of the preceding embodiments, wherein the one or more non-polycarbonate compounds comprise polystyrene, SAN, ABS, HIPS, PMMA, or any combination blends or copolymers thereof.
Embodiment 25. The method of any one of the preceding embodiments, wherein the step of pretreating comprises:
   a. structurally altering the waste feedstock to increase the dissolvable surface area of the waste feedstock to reduce the time to dissolve the one or more waste polycarbonates in the one or more polycarbonate solvents.
Embodiment 26. The method of any one of the previous embodiments, wherein the step of separating the one or more adjusted polycarbonates and the recovery solution comprises:
   a. devolatilizing the recovery solution to remove the one or more polycarbonate solvents and to yield the adjusted polycarbonates in a solid form.
Embodiment 27. The method of any one of the previous embodiments, further comprising:
   a. before contacting the recovery solution and the one or more functional compounds, contacting the recovery solution and a scavenger or absorption material to remove or make inert one or more non-polycarbonate compounds .
Embodiment 28. The method of any one of the previous embodiments, wherein the scavenger and/or absorption material is configured to bind with the one of more contamination compounds.
Embodiment 29. The method of any one of the previous embodiments, wherein after the contacting the waste feedstock and the one or more polycarbonate compounds, the recovery solution comprises the one or more waste polycarbonates in a concentration of about 5 weight percent to about 30 weight percent by the total weight of the recovery solution.
Embodiment 30. The method of any one of the previous embodiments, wherein the one or more waste polycarbonates have a weight average molecular weight of between about 10 kg/mol to about 100 kg/mol.
Embodiment 31. The method of any one of the previous embodiments, wherein the one or more waste polycarbonates have a number average molecular weight of between 3 kg/mol to about 50 kg/mol.
Embodiment 32. The method of any one of the previous embodiments, wherein the one or more polycarbonate solvents have a boiling point of 160 °C or less.
Embodiment 33. The method of any one of the previous embodiments, wherein the one or more polycarbonate solvents comprise a polar aprotic solvent.
Embodiment 34. The method of any one of the previous embodiments, wherein the one or more polycarbonate solvents comprise at least one halogen atom.
Embodiment 35. The method of any one of the previous embodiments, wherein the one or more polycarbonate solvents comprise a solvent that is immiscible with water.
Embodiment 36. The method of any one of the previous embodiments, wherein the one or more polycarbonate solvents comprise dichloromethane, or any combination thereof.
Embodiment 37. The method of any one of the previous embodiments, wherein the perforated structure comprises perforations having a width of about 500 nm to about 20 cm.
Embodiment 38. The method of any one of the previous embodiments, wherein the one or more functional compounds are added in an amount sufficient to chain terminate, branch, and/or chain extend the one or more waste polycarbonates to form the one or more adjusted polycarbonates having a desirable weight and/or number average molecular weight.
Embodiment 39. The method of any one of the previous embodiments, wherein the one or more functional compounds are added to the recovery solution in an amount sufficient to increase the number and/or weight average molecular weight by about 5 percent or more of the one or more recycled polycarbonates.
Embodiment 41. The method of any one of the previous embodiments, wherein the one or more functional compounds are added to the recovery solution in an amount of about 0.01 weight percent or more, based on the total weight of the recovery solution.
Embodiment 42. The method of any one of the previous embodiments, wherein the one or more functional compounds further comprise one or more of one or more chain terminators, one or more branching agents, or a combination thereof.
Embodiment 43. The method of any one of the previous embodiments, wherein the chain terminators has reactivity with a hydroxyl group or a carboxyl group.
Embodiment 44. The method of any one of the previous embodiments, wherein the chain terminators is configured to participate at least once in a condensation reaction.
Embodiment 45. The method of any one of the previous embodiments, the chain terminators comprises one or more functional groups that are each react-able in a condensation reaction.
Embodiment 46. The method of any one of the previous embodiments, wherein the chain terminators comprises one or more of isocyanates, amines, esters, epoxides, anhydrides, carboxylic acids, or any combination thereof
Embodiment 47. The method of any one of the previous embodiments, wherein chain extender has reactivity with two or more separate hydroxyl groups.
Embodiment 48. The method of any one of the previous embodiments, wherein the chain extender is configured to participate at least twice in a condensation reaction.
Embodiment 49. The method of any one of the previous embodiments, the chain extender comprises two or more functional groups that are each react-able in a condensation reaction.
Embodiment 50. The method of any one of the previous embodiments, wherein the chain extender comprises one or more of isocyanates, amines, esters, epoxides, anhydrides, carboxylic acids, or any combination thereof.

### Illustrative Examples

### Example 1:

WEEE samples is sokaed into an dichloromethane in a container and shook gently for 8 hours. The mixture is filtered through a nylon filter. The soluble and insoluble parts arecollected separately and dried. Table 1 summarizes the weight of each insoluble parts before and after solvent treatment and total amount of PC recovered in this process.

**Table 1: Weight of insoluble parts before and after solvent treatment and amount of PC recovered in this process**

| | | | Weight (gram) | |
|---|---|---|---|---|
| # | Part | Material | Before | After |
| 1 | Top | PC-o | 41.99 | - |
| 2 | Top insider | PC-o | 25.57 | - |
| 3 | Transluscent ring | PC-t | 12.87 | - |
| 4 | Bottom + labels | PC-o | 28.49 | - |
| 5 | Button | PC-o | 0.46 | - |
| 6 | Middle part | PC-o | 35.17 | - |
| 7 | Screws | Metal | 1.02 | 1.01 |
| 8 | Black foam | EVA | 0.05 | 0.09 |
| 9 | Bleck/red cable | PA/PP/Metal | 0.45 | 0.44 |
| 10 | Cables W/Y/B/G | PTFE/Metal | 4.45 | 4.74 |
| | | Recycled PC | - | 140.00 |
| | | Total | 150.51 | 146.28 |

### Example 2:

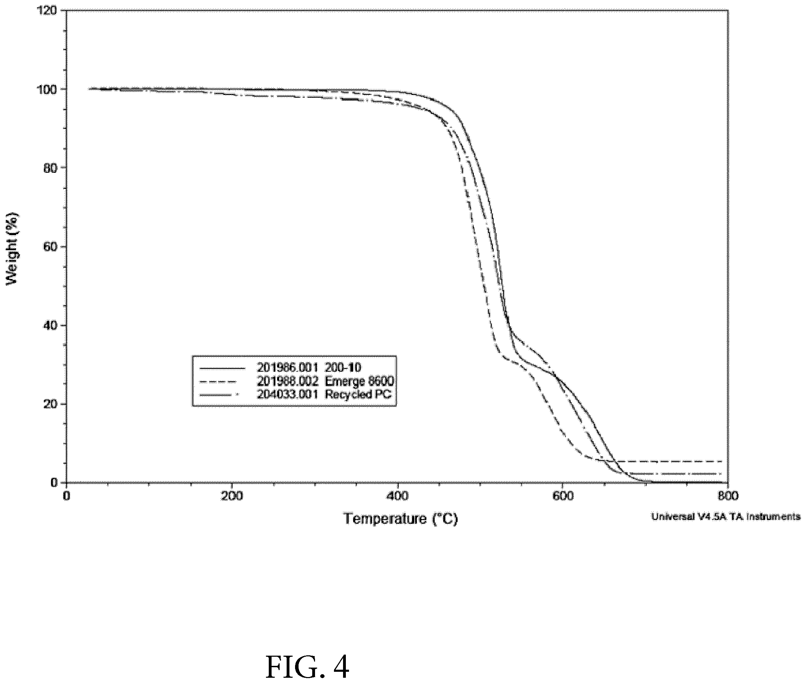

The dissolving time required to react 15 wt% PC concentration in DCM is identified by testing three different cases: i) The entire device is placed into the container and solvent was added, ii) The devices are dismantled manually and plastic parts are shreded before dissolving, iii) The devices are filled into a nylon bag with 100 micron mesh size and the bag is placed into the solvent container. The electronic device enclosures are sokaed into an dichloromethane in a container and shook gently. In 30 mins of time intervals, the samples are taken and the solids contents are determined after evaporating the solvent. As shown in Figure 4, in all three cases, target concentration are reached after 2h. Figure 4 is a Time vs concentration for three different dissolving experiments.

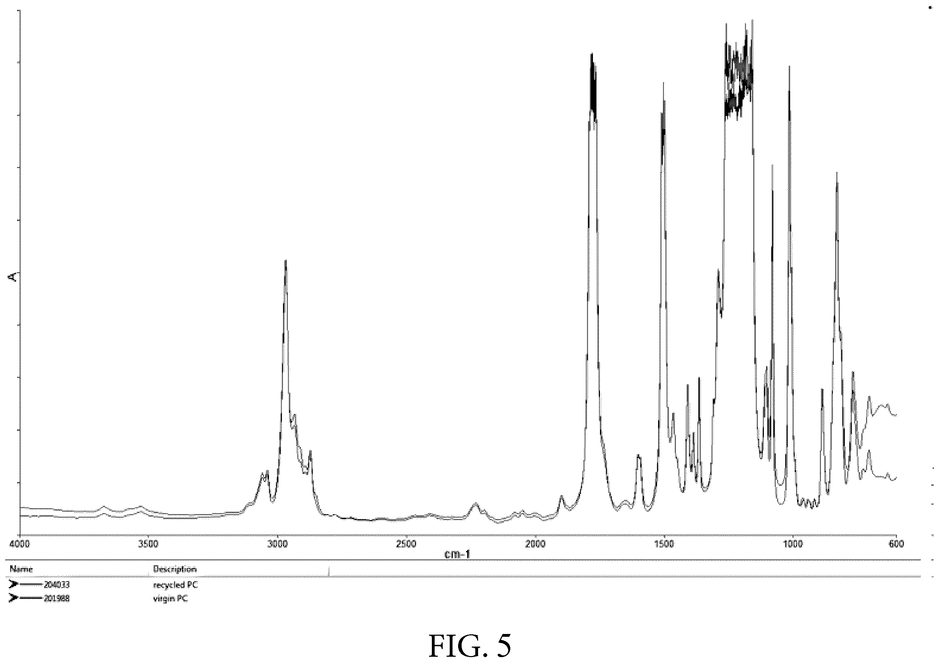

The recovered polycarbonate is collected, the solvent is evaporated, and the recovered polycarbonate is analyzed for the corresponding molecular weight, melt flow rate and additive content. As summarized in Table 1, the recycled polycarbonate includes very similar properties and content to the polycarbonate used in production of the device enclosures. In Figure 5, TGA of the recycled polycarbonate, as given in comparison to virgin polycarbonates, shows that its thermal stability was not influenced by the recycling process. Figure 5 shows TGA for the recycled polycarbonate in comparison to virgin polycarbonates FTIR spectrum for the recycled polycarbonate. As shown in Figure 6, does not reveal any additional peaks as compared to virgin polycarbonate which is an indication that the recycled PC did not contain polymeric contaminants in detectable quantities.

**Table 2: Content and characteristics of recycled polycarbonate in comparison to polycarbonate identified on device enclosure**

| | | | Before | | After |
|---|---|---|---|---|---|
| | | | study 20-0506 | study 20-0506 | study 20-0507 |
| | | | 201437 | 201438 | |
| Contents | | Unit | Opaque PC | Translucent PC | Recycled |
| Additives - Antioxidant | Irgafos P168 | ppm | 1610 | 260 | 450 |
| | Irgafos P168-oxidized | ppm | 290 | 480 | 270 |
| | Irganox 1076 | ppm | 680 | ND | 440 |
| Additives - Mould Release | Loxiol EP861 (=PETS) | ppm | 2020 | 4110 | 3000 |
| Additives - UV | Tin.1577 | ppm | 2260 | ND | 1700 |
| | Tinuvin 329 | ppm | 1290 | ND | 1550 |
| Ash Content | | wt% | 3.5 | ND | 2.3 |
| GPC for Polycarbonate | PD | | 2.32 | 2.68 | 2.28 |
| | Mn | g/mol | 11600 | 10900 | 11500 |
| | Mw | g/mol | 27000 | 29300 | 26300 |
| | MZ | g/mol | 41100 | 45900 | 40400 |
| Melt Flow Rate | MFR | g/10min | 12.95 | 10.33 | 15.7 |
| 7min | MFI | g/10min | 12.41 | 9.9 | 15.04 |

### Example 3:

Example 3 shows Polycarbonate collected from discarded greenhouse sheets as exposed to outdoor conditions (UV-light and humidity) for more than 10 years. Degradation caused by hydrolysis results in reduction in chain length and molecular weight. This PC is dissolved in dichloromethane (15 wt% solution) by gently shaking for > 2 hours. The mixture is filtered through a nylon filter (100mu), and the resulting mixture is divided in four separate crimp vials (~ 5 g). The vials are sealed and gently shook for 6 hours. Afterwards, the polymer is precipitated in acetone, filtered, and dried. Significant increase in molecular weight is observed when bifunctional and multifunctional chain extenders are added as molecular repair agents.
• Sample 1: blank (no additional compound) comparative example
• Sample 2: 30 mg trichloroacetyl isocyanate was added.
• Sample 3: 10.5 mg methylene diphenyl diisocyanate (MDI) was added.
• Sample 4: 11.2 mg pMDI (Mn = 400 g/mol, ~ 3,2 NCO groups per chain)

**Table 3. Change in molecular weight as molecular repair agent was added.**

| | Sample 1 | Sample 2 | Sample 3 | Sample 4 |
|---|---|---|---|---|
| Mn | 12325 | 12675 | 12962 | 11362 |
| Mw | 24356 | 25987 | **61780** | **41329** |
| Mz | 38787 | 86740 | **1806156** | **845564** |

## Claims

1. A method, comprising:
a. contacting a waste feedstock housed in a perforated container and one or more polycarbonate solvents that are configured to dissolve one or more waste polycarbonates in the waste feedstock to form a recovery solution;
b. contacting the recovery solution and one or more functional compounds comprising a chain extender to form one or more adjusted polycarbonates from the one or more waste polycarbonates in the recovery solution; and
c. separating the one or more adjusted polycarbonates and the recovery solution.

2. The method of claim 1, wherein the one or more adjusted polycarbonates have a number and/or weight average molecular weight that is larger than a number and/or weight average molecular weight of the one or more waste polycarbonates.

3. The method of any one of the previous claims, further comprising:
a. separating the waste feedstock and the recovery solution before contacting the recovery solution and the one or more functional compounds.

4. The method of any one of the previous claims, further comprising:
a. agitating the waste feedstock and/or the one or more polycarbonate solvents to disperse the one or more waste polycarbonates in the recovery solution.

5. The method of any one of the previous claims, wherein the step of agitating comprises cavitating, stirring, boiling, shaking, spinning, sonication, vibration, or any combination thereof.

6. The method of any one of the previous claims, further comprising:
a. applying ultrasonic waves to the waste feedstock and/or the one or more polycarbonate solvents to form cavitation bubbles so that the one or more waste polycarbonates are dispersed in the recovery solution.

7. The method of any one of the previous claims, further comprising:
a. applying heat to the waste feedstock and/or the one or more polycarbonate solvents to dissolve the one or more waste polycarbonates in the recovery solution.

8. The method of any one of the previous claims, wherein heating is applied to a temperature of about a boiling temperature of the one or more polycarbonate solvents or less.

9. The method of any one of the previous claims, wherein the one or more functional compounds comprise one or more of one or more end capping compounds, one or more chain extenders, or both.

10. The method of any one of the previous claims, wherein the perforated container comprises a filter layer that is permeable and is physically separate from the perforated structure.

11. The method of any one of the previous claims, wherein the step of contacting the one or more polycarbonate solvents and the waste feedstock is performed in a sealed housing so that the one or more polycarbonate solvents are contained within the sealed housing when in a gaseous form.

12. The method of any one of the previous claims, further comprising:
a. before contacting the waste feedstock and the one or more polycarbonate solvents, pretreating the waste feedstock to remove one or more non-polycarbonate compounds.

13. The method of any one of the preceding claims, wherein the step of pretreating comprises:
a. contacting the waste feedstock and one or more pretreatment solvents to dissolve one or more non-polycarbonate compounds that are dissolvable in the one or more polycarbonate solvents.

14. The method of any one of the previous claims, wherein the one or more functional compounds are added to the recovery solution in an amount sufficient to increase the number and/or weight average molecular weight by about 5 percent or more of the one or more recycled polycarbonates.

15. The method of any one of the previous claims, wherein the one or more functional compounds are configured to react with one or more hydroxyl and/or carboxyl groups.
